# EUROPEAN PATENT APPLICATION

(11) **EP 4 304 213 A1**
(43) Date of publication of application: **10.01.2024**
(21) Application number: 22762510.0
(22) Date of filing: 01.03.2022
(51) Int. Cl.: H04W 4/06, H04W 52/02, H04W 76/28

(54) **METHOD AND APPARATUS FOR RECEIVING MULTICAST SERVICE, AND ELECTRONIC DEVICE**

(30) Priority: 05.03.2021 CN 202110246054
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Lavoix
(86) International application number: PCT/CN2022/078556
(87) International publication number: WO 2022/184045

(57) **Abstract**

This application pertains to the field of communications technologies, and discloses a multicast service receiving method and apparatus, and an electronic device. The multicast service receiving method is performed by a terminal. The terminal receives at least one target multicast service or is interested in at least one target multicast service. The method includes: receiving DRX configuration parameters, where the DRX configuration parameters include parameters of a unicast DRX pattern and/or parameters of a DRX pattern corresponding to a TMGI service; and performing discontinuous reception of the target multicast service according to the DRX configuration parameters, where the discontinuous reception includes at least one of the following: monitoring, within an active time of the unicast DRX pattern, a PDCCH scrambled by a C-RNTI; and monitoring, within an active time of the DRX pattern corresponding to the TMGI service, a PDCCH scrambled by a G-RNTI corresponding to the TMGI service.

## Description

### CROSS-REFERENCE TO RELATED APPLICATIONS

This application claims priority to Chinese Patent Application No. 202110246054.6, filed in China on March 5, 2021, which is incorporated herein by reference in its entirety.

### TECHNICAL FIELD

This application pertains to the field of communications technologies, and in particular, to a multicast service receiving method and apparatus, and an electronic device.

### BACKGROUND

In long term evolution (Long Term Evolution, LTE) broadcast multicast transmission, a multimedia broadcast multicast service (Multimedia Broadcast Multicast Service, MBMS) can be sent in multicast broadcast single frequency network (Multicast Broadcast Single Frequency Network, MBSFN) mode, and a multicast service can be sent in single cell point to multipoint (Single cell Point to Multipoint, SC-PTM) mode. In MBSFN mode, cells in a same MBSFN area synchronously send a same broadcast service, so that user equipment (User Equipment, LTE, also referred to as a terminal) receives the service conveniently. Control information (control channel parameters, traffic channel parameters, scheduling information, and the like) and data information of the MBMS service are all sent in broadcast mode, so that both LTE in an idle (idle) state and UE in a connected state can receive the MBMS service. A greatest difference between the SC-PTM mode and the MBSFN mode lies in that transmission is scheduled in a single cell, and that service scheduling is performed by using a group radio network temporary identifier (Group Radio Network Temporary Identifier, G-RNTI). The control channel parameters, a service identity, period information, and the like are broadcast in a broadcast message. The scheduling information is notified by using a physical downlink control channel (Physical Downlink Control Channel, PDCCH) scrambled by the G-RNTI. A data part is sent in multicast mode. This means that interested UE monitors the PDCCH scrambled by the G-RNTI to process data scheduling and then receives data.

For a multicast service, a network side can simultaneously configure two paths for the LTE for transmission. One path is a point-to-point (Point to Point, PTP) path, and the other path is a point-to-multipoint (Point to Multipoint, PTM) path. The PTM path means that a public radio network temporary identifier (Radio Network Temporary Identifier, RNTI), such as a G-RNTI, is used for PDCCH scrambling and that all UEs in a group jointly monitor the G-RNTI-based scheduling and receive subsequently scheduled data, where data transmitted once can be received by a plurality of LTEs together. The PTP path means that a LTE-specific cell radio network temporary identifier (Cell Radio Network Temporary Identifier, C-RNTI) is used for PDCCH scrambling and that only this UE can monitor the C-RNTI-based scheduling and receive subsequently scheduled data, where data transmitted once can be received by only one UE.

The PTM is for simultaneous transmission to a plurality of UEs, and transmission efficiency is relatively high, but coverage of all UEs needs to be comprehensively considered. Therefore, selection of transmission parameters, for example, using omnidirectional antennas, and considering poor link quality of LTE, needs to be applicable to all UEs as much as possible. The PTM may not be effective for individual UE with extremely poor link quality. The PTP is for dedicated transmission to one LTE, and link conditions of this LTE may be considered for adjusting transmission parameters, for example, using directional or beamforming antennas, and setting appropriate transmission parameters based on current link conditions of the UE. Therefore, a transmission effect is relatively good for a single UE. However, if there are a plurality of UEs, a plurality of transmission resources are required, and resource utilization is relatively low.

A purpose of discontinuous reception (Discontinuous Reception, DRX) is to save power. A terminal in a DRX state does not need to be connected to monitor a control channel. However, if the terminal does not monitor the control channel for a long time, once data arrives, a data transmission delay is increased. To take both power saving and the transmission delay into account, 5G medium access control (Medium Access Control, MAC) supports two DRX cycles: a long DRX cycle and a short DRX cycle, based on duration of channel monitoring by the terminal. If it is predicted that data frequently arrives at the terminal or that a service is delay-sensitive, the network side may configure the terminal to use the short DRX cycle. If it is predicted that data infrequently arrives at the terminaland delay-insensitive, the network may configure the terminal to use only the long DRX cycle. To facilitate the terminal to switch between the long DRX cycle and the short DRX cycle, it is required that the long DRX cycle should be an integer multiple of the short DRX cycle, to ensure that onDuration (onDuration) of the short DRX cycle is aligned with onDuration of the long DRX cycle.

In the related art, LTE multicast transmission uses only one PTM transmission mode, PTM transmission does not support hybrid automatic repeat request (Hybrid Automatic Repeat Request, HARQ) feedback and retransmission, and there is no PTP path. Therefore, a DRX design is relatively simple.

In multicast transmission designed for NR, and in particular, in a multicast service with a high quality of service (Quality of Service) requirement (multicast service with a high QoS requirement), all UEs need to perform reception in a connected (Connected) state. Therefore, it is possible to also configure a PTP path. If DRX parameters are configured for a unicast (unicast) service, and DRX parameters are also configured for a temporary mobile group identity (Temporary Mobile Group Identity, TMGI), how the UE monitors (monitors) a PDCCH scrambled by a C-RNTI/G-RNTI in different DRX patterns is still unclear.

### SUMMARY

Embodiments of this application provide a multicast service receiving method and apparatus, and an electronic device to improve experience of a terminal in receiving a multicast service and a power saving effect of the terminal.

According to a first aspect, an embodiment of this application provides a multicast service receiving method. The method is performed by a terminal. The terminal receives at least one target multicast service or is interested in at least one target multicast service. The method includes:
receiving discontinuous reception DRX configuration parameters, where the DRX configuration parameters include parameters of a unicast (unicast) DRX pattern and/or parameters of a DRX pattern corresponding to a temporary mobile group identity TMGI service; and
performing discontinuous reception of the target multicast service according to the DRX configuration parameters, where the discontinuous reception includes at least one of the following:
   monitoring, within an active time of the unicast DRX pattern, a physical downlink control channel PDCCH scrambled by a cell radio network temporary identifier C-RNTI; and
   monitoring, within an active time of the DRX pattern corresponding to the TMGI service, a PDCCH scrambled by a group radio network temporary identifier G-RNTI corresponding to the TMGI service.

According to a second aspect, an embodiment of this application provides a multicast service receiving apparatus. The apparatus is applied to a terminal. The terminal receives at least one target multicast service or is interested in at least one target multicast service. The apparatus includes:
a receiving module, configured to receive discontinuous reception DRX configuration parameters, where the DRX configuration parameters include parameters of a unicast unicast DRX pattern and/or parameters of a DRX pattern corresponding to a temporary mobile group identity TMGI service; and
a processing module, configured to perform discontinuous reception of the target multicast service according to the DRX configuration parameters, where the discontinuous reception includes at least one of the following:
   monitoring, within an active time of the unicast DRX pattern, a physical downlink control channel PDCCH scrambled by a cell radio network temporary identifier C-RNTI; and
   monitoring, within an active time of the DRX pattern corresponding to the TMGI service, a PDCCH scrambled by a group radio network temporary identifier G-RNTI corresponding to the TMGI service.

According to a third aspect, an embodiment of this application further provides an electronic device. The electronic device includes a processor, a memory, and a program or instructions stored in the memory and capable of running on the processor. When the program or instructions are executed by the processor, the steps of the foregoing method are implemented.

According to a fourth aspect, an embodiment of this application provides a readable storage medium. The readable storage medium stores a program or instructions. When the program or instructions are executed by a processor, the steps of the foregoing method are implemented.

According to a fifth aspect, an embodiment of this application provides a chip. The chip includes a processor and a communications interface. The communications interface is coupled to the processor. The processor is configured to run a program or instructions to implement the method according to the first aspect.

According to a sixth aspect, a computer program product is provided. The computer program product is stored in a non-volatile storage medium. The computer program product is executed by at least one processor to implement the method according to the first aspect.

In the embodiments of this application, in a multicast service operation, a network side configures different DRX parameters to instruct a terminal to monitor different PDCCHs and save power while receiving multicast and unicast services, so as to ensure that power saving can be achieved as much as possible without reducing user experience in reception and that experience of the terminal in receiving the multicast service and a power saving effect of the terminal are improved on a basis of ensuring efficiency of a communications system.

### BRIEF DESCRIPTION OF DRAWINGS

FIG. 1 is a schematic diagram of a wireless communications system;
FIG. 2 is a schematic flowchart of a multicast service receiving method according to an embodiment of this application;
FIG. 3 is a schematic diagram of a structure of a multicast service receiving apparatus according to an embodiment of this application; and
FIG. 4 is a schematic diagram of composition of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the numbers used in this way are interchangeable in appropriate circumstances, so that the embodiments of this application can be implemented in other orders than the order illustrated or described herein. In addition, the term "and/or" in the specification and claims indicates at least one of connected objects, and the character "/" generally represents an "or" relationship between associated objects.

Technologies described in this specification may be applied to a long term evolution (Long Term Evolution, LTE) or LTE-Advanced (LTE-Advanced, LTE-A) system, and may also be applied to various wireless communications systems, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, and other systems. The terms "system" and "network" are usually used interchangeably. The CDMA system can implement radio technologies such as CDMA2000 and universal terrestrial radio access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communications (Global System for Mobile Communications, GSM). The OFDMA system can implement radio technologies such as ultra mobile broadband (Ultra Mobile Broadband, UMB), evolved UTRA (Evolved-UTRA, E-UTRA), IEEE 802.11 (Wi-Fi), IEEE 802.16 (WiMAX), IEEE 802.20, and Flash-OFDM. The UTRA and E-UTRA are parts of a universal mobile telecommunications system (Universal Mobile Telecommunications System, UMTS). The LTE and more advanced LTE (such as LTE-A) are new UMTS releases that use the E-UTRA. The UTRA, E-UTRA, UMTS, LTE, LTE-A, and GSM are cited from descriptions of documents of the organization named "3rd Generation Partnership Project" (3rd Generation Partnership Project, 3GPP). The CDMA2000 and UMB are cited from descriptions of documents of the organization named "3rd Generation Partnership Project 2" (3GPP2). The technologies described in this specification may be used for the foregoing systems and radio technologies, and may also be used for other systems and radio technologies. However, in the following descriptions, an NR system is described for an illustration purpose, and NR terms are used in most of the following descriptions, although these technologies may also be applied to other systems than the NR system.

Examples provided in the following description are not intended to limit the scope, applicability, or configuration described in the claims. Functions and arrangements of discussed elements may be changed without departing from the spirit and scope of this disclosure. Various examples may be omitted or replaced properly, or various procedures or components may be added. For example, the described method may be performed in an order different from the described order, and steps may be added, omitted, or combined. In addition, features described with reference to some examples may be combined in other examples.

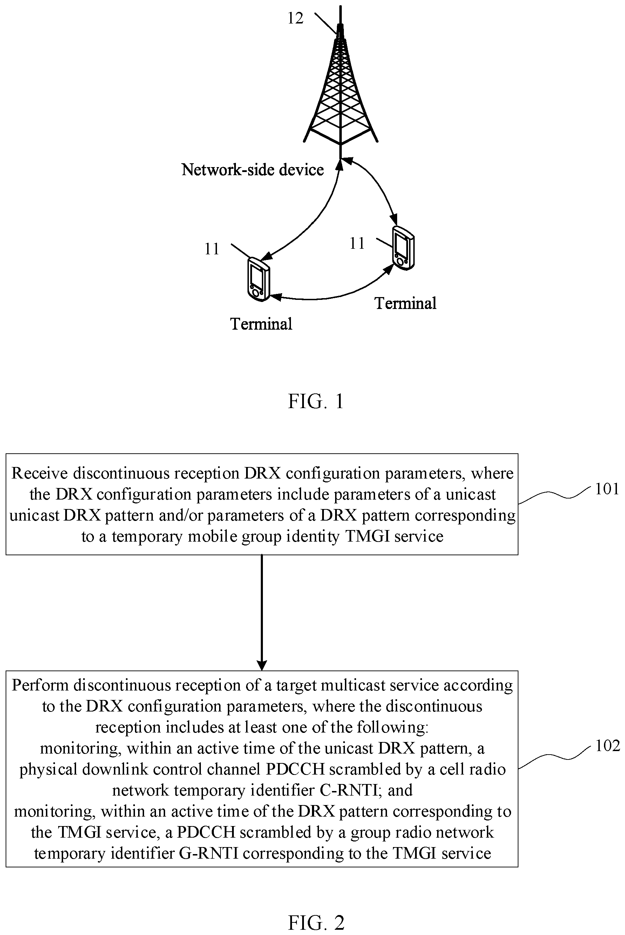

FIG. 1 is a block diagram of a wireless communications system to which an embodiment of this application may be applied. The wireless communications system includes a terminal 11 and a network-side device 12. The terminal 11 may also be referred to as a terminal device or user equipment (User Equipment, UE). The terminal 11 may be a terminal-side device such as a mobile phone, a tablet computer (Tablet Computer), a laptop computer (Laptop Computer), a personal digital assistant (Personal Digital Assistant, PDA), a mobile Internet device (Mobile Internet Device, MID), a wearable device (Wearable Device), or a vehicle-mounted device. It should be noted that a specific type of the terminal 11 is not limited in this embodiment of this application. The network-side device 12 may be a base station or a core network. The base station may be a 5G base station or a base station of a later version (for example, a gNB or a 5G NR NB), or a base station in another communications system (for example, an eNB, a WLAN access point, or another access point), or a location server (for example, an E-SMLC or an LMF (Location Manager Function)). The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, or another appropriate term in the art. As long as a same technical effect is achieved, the base station is not limited to a specific technical term. It should be noted that only a base station in an NR system is used as an example in the embodiments of this application, but a specific type of the base station and a specific communications system are not limited in the embodiments of this application.

To support a DRX mechanism, a network side configures DRX-related timers and parameters for UE. The configuration specifically includes:
drx-LongCycleStartOffset: used to configure a period and an offset of a long DRX cycle, where the period and offset are expressed in units of milliseconds;
drx-ShortCycle: used to configure a period and an offset of a short DRX cycle, where the period and offset are expressed in units of milliseconds;
drx-ShortCycleTimer: used to control duration of using the short DRX cycle by the UE, in units of integers, indicating that once the UE enters the short DRX cycle, the UE needs to maintain an integer multiple of short cycles;
drx-onDurationTimer: DRX onDuration timer, where during running of the timer, the UE needs to continuously monitor a PDCCH of the network, and the timer is expressed in units of milliseconds;
drx-SlotOffset: delay in starting the drx-onDurationTimer by the UE, where this parameter is used to set an offset of a start time of DRX onDuration relative to a start point of a subframe, and the offset is an integer multiple of 1/32 millisecond;
drx-InactivityTimer: DRX inactivity timer, where the timer is started at a first symbol after the UE receives physical downlink control channel (Physical Downlink Control Channel, PDCCH) signaling for uplink/downlink new data scheduling, and during running of the timer, the UE needs to continuously monitor the control channel, and the timer is expressed in units of milliseconds;
drx-HARQ-RTT-TimerDL: downlink hybrid automatic repeat request (Hybrid Automatic Repeat request, HARQ) round-trip time (Round-Trip Time, RTT) timer, maintained based on each downlink process, where duration of the timer is a minimum time interval between a HARQ feedback time and reception of HARQ retransmission for this process; only when data corresponding to the downlink process is not successfully decoded can the UE start the timer at a first symbol after HARQ NACK feedback of the process; if only the drx-HARQ-RTT-TimerDL and/or drx-HARQ-RTT-TimerLTL currently run/runs on the UE, the UE does not need to monitor the PDCCH; and the timer is expressed in units of symbols;
drx-HARQ-RTT-TimerUL: uplink HARQ RTT timer, maintained based on each uplink process, where duration of the timer is a minimum time interval between a transmission time of a physical uplink shared channel (Physical Uplink Shared Channel, PUSCH) and reception of HARQ retransmission for this process; after uplink PUSCH transmission, the UE starts the uplink HARQ RTT timer for the uplink process; if PUSCH repetition (PUSCH repetition) is used for PUSCH transmission, the uplink HARQ RTT timer is started after the first repetition of the PUSCH to ensure that after a base station obtains the PUSCH through parsing in advance, the repeated transmission of the PUSCH can be terminated in time; and the timer is expressed in units of milliseconds;
drx-RetransmissionTimerDL: downlink retransmission timer, where the timer is started at a next symbol after the drx-HARQ-RTT-TimerDL expires; during running of the timer, the UE monitors the control channel of the network, and stops the timer if the UE receives downlink scheduling information or a downlink configured grant for the process; and the timer is expressed in units of timeslots (timeslot); and
drx-RetransmissionTimerUL: uplink retransmission timer, where the timer is started at a next symbol after the drx-HARQ-RTT-TimerUL expires; during running of the timer, the UE monitors the control channel of the network, and stops the timer if the UE receives uplink scheduling information or an uplink configured grant for the process; and the timer is expressed in units of timeslots (timeslot).

The foregoing is a basic DRX mechanism and related parameters used in the related art. All the parameters constitute one set of DRX configurations, and the UE performs corresponding discontinuous reception operations according to the configurations.

In the related art, LTE multicast transmission uses only one PTM transmission mode, PTM transmission does not support HARQ feedback and retransmission, and there is no PTP path. Therefore, a DRX design is relatively simple.

In multicast transmission designed for NR, and in particular, in a multicast service with a high QoS requirement (multicast service with a high QoS requirement), all UEs need to perform reception in a connected (Connected) state. Therefore, it is possible to also configure a PTP path. If DRX parameters are configured for unicast (unicast), and DRX parameters are also configured for a temporary mobile group identity (TMGI), how the UE monitors a PDCCH scrambled by a C-RNTI/G-RNTI in different DRX patterns is still unclear.

In particular, it is possible to allow the G-RNTI to schedule initial HARQ transmission and the C-RNTI to schedule HARQ retransmission in HARQ hybrid operation mode, but this has impact on the existing DRX timer and monitoring mechanism, and UE behaviors need to be enhanced to achieve a comprehensive effect of saving power and not missing useful scheduling.

An embodiment of this application provides a multicast service receiving method. The method is performed by a terminal. The terminal receives at least one target multicast service or is interested in at least one target multicast service. As shown in FIG. 2, the method includes the following steps.

Step 101: Receive discontinuous reception DRX configuration parameters, where the DRX configuration parameters include parameters of a unicast unicast DRX pattern and/or parameters of a DRX pattern corresponding to a temporary mobile group identity TMGI service.

Step 102: Perform discontinuous reception of the target multicast service according to the DRX configuration parameters, where the discontinuous reception includes at least one of the following:
monitoring, within an active time of the unicast DRX pattern, a physical downlink control channel PDCCH scrambled by a cell radio network temporary identifier C-RNTI; and
monitoring, within an active time of the DRX pattern corresponding to the TMGI service, a PDCCH scrambled by a group radio network temporary identifier G-RNTI corresponding to the TMGI service.

In this embodiment of this application, in a multicast service operation, a network side configures different DRX parameters to instruct a terminal to monitor different PDCCHs and save power while receiving multicast and unicast services, so as to ensure that power saving can be achieved as much as possible without reducing user experience in reception and that experience of the terminal in receiving the multicast service and a power saving effect of the terminal are improved on a basis of ensuring efficiency of a communications system.

The DRX pattern is a DRX pattern, and a plurality of different DRX patterns can be parallel, that is, active times of a plurality of different DRX patterns can be maintained independently. For example, the active time of the unicast DRX pattern and an active time of a DRX pattern corresponding to a TMGI service 1 are maintained independently, and may or may not overlap, or partially overlap.

In some embodiments, if the terminal is interested in at least one TMGI service, the DRX configuration parameters include parameters of at least one set of DRX patterns, and each set of DRX patterns corresponds to one TMGI service or G-RNTI. In this way, after receiving the parameters of the DRX pattern, the terminal can monitor, within the active time of the DRX pattern, the PDCCH scrambled by the corresponding G-RNTI.

In some embodiments, the method further includes:
monitoring, within an active time of each set of DRX patterns, a PDCCH scrambled by the corresponding G-RNTI.

In some embodiments, the DRX configuration parameters include at least a period and an offset of a long DRX cycle, and duration of a DRX onDuration timer. To be specific, the network side configures the period and offset of the long DRX cycle for the terminal, and the period and offset may be expressed in units of milliseconds; and the network side further configures the DRX onDuration timer for the terminal. During running of the timer, the terminal needs to continuously monitor a PDCCH scrambled by a corresponding RNTI. The timer may be expressed in units of milliseconds.

In some embodiments, if the TMGI service supports HARQ feedback and retransmission or a multicast radio bearer MRB in the TMGI service supports HARQ feedback and retransmission, the DRX configuration parameters include at least one of the following:
a hybrid automatic repeat request HARQ round-trip RTT timer; and
a retransmission timer.

In some embodiments, the method further includes:
after a negative acknowledgement (Negative Acknowledgement, NACK) is fed back to the network side, starting the HARQ RTT timer, and after the HARQ RTT timer expires, starting the retransmission timer.

In some embodiments, the method further includes:
when a HARQ feedback function is enabled, starting and maintaining the HARQ RTT timer and the retransmission timer; or
when a HARQ feedback function is disabled, not starting or maintaining the HARQ RTT timer and the retransmission timer.

In this way, when the HARQ feedback function is disabled, it is unnecessary to start or maintain the HARQ RTT timer and the retransmission timer. This can simplify an operation of the terminal, and further improve the power saving effect.

In some embodiments, the terminal is a terminal in a connected state, and the DRX configuration parameters include the parameters of the unicast DRX pattern and the parameters of the DRX pattern corresponding to the TMGI service. In this way, after the terminal receives the parameters of the DRX pattern, the terminal may monitor, within the active time of the unicast DRX pattern, the PDCCH scrambled by the C-RNTI, and monitor, within the active time of the DRX pattern corresponding to the TMGI service, the PDCCH scrambled by the G-RNTI.

In some embodiments, the terminal is a terminal in a connected state, the DRX configuration parameters include the parameters of the unicast DRX pattern, and the terminal monitors, within the active time of the unicast DRX pattern, the PDCCH scrambled by the C-RNTI, and a PDCCH scrambled by a G-RNTI corresponding to a TMGI service of interest. In this way, only the unicast DRX pattern may be configured, so that signaling overheads between the network side and the terminal can be reduced. In addition, the terminal may maintain only the unicast DRX pattern. This can simplify the operation of the terminal and further improve the power saving effect.

In some embodiments, the DRX configuration parameters include parameters of one set of unicast DRX patterns, and the terminal monitors, within an active time of the set of unicast DRX patterns, PDCCHs scrambled by all C-RNTIs and PDCCHs scrambled by G-RNTIs corresponding to TMGI services of interest; or
the DRX configuration parameters include parameters of one set of DRX patterns, and the terminal monitors, within an active time of the set of DRX patterns, PDCCHs scrambled by all C-RNTIs and PDCCHs scrambled by G-RNTIs corresponding to TMGI services of interest.

In this way, only one set of DRX patterns may be configured, so that signaling overheads between the network side and the terminal can be reduced. In addition, the terminal may maintain only one set of DRX patterns. This can simplify the operation of the terminal and further improve the power saving effect.

In some embodiments, the DRX configuration parameters include parameters of one set of unicast DRX patterns and parameters of N sets of DRX patterns corresponding to TMGI services or G-RNTIs, where N is greater than or equal to 1 and less than or equal to m, and m is the number of TMGI services of interest to the terminal. When N is equal to 1, a same set of DRX patterns is configured for all TMGI services; when N is equal to m, a set of DRX patterns is configured for each TMGI service; or when N is greater than 1 and less than m, the m TMGIs may be divided into N groups, and one set of DRX patterns is configured for each group of TMGI services.

In some embodiments, the DRX configuration parameters include any one of the following:
configuration information about whether a short DRX cycle is started for each of the N+1 sets of DRX patterns;
configuration information about whether a short DRX cycle is started for the unicast DRX pattern and configuration information about whether a short DRX cycle is started for the N sets of DRX patterns;
configuration information about whether a short DRX cycle is started for the N+1 sets of DRX patterns; and
configuration information about whether a short DRX cycle is started for each group of DRX patterns in the N+1 sets of DRX patterns, where the N+1 sets of DRX patterns are divided into at least two groups of DRX patterns.

In some embodiments, the method further includes:
monitoring, within an active time of a unicast DRX pattern, a PDCCH scrambled by a C-RNTI; and
separately monitoring, within active times of N DRX patterns corresponding to TMGI services, PDCCHs scrambled by corresponding G-RNTIs.

In some embodiments, N is less than m and greater than 1, the m TMGI services of interest to the terminal are divided into N groups, and each group corresponds to one DRX pattern. In this way, the terminal monitors, within an active time of the DRX pattern corresponding to each group, a PDCCH scrambled by a G-RNTI corresponding to the group of TMGI services. The number of TMGI services in each group may be the same or may be different.

In some embodiments, the DRX configuration parameters explicitly indicate or implicitly indicate whether the N sets of DRX patterns support C-RNTI-based retransmission. If the DRX configuration parameters explicitly indicate whether the N sets of DRX patterns support C-RNTI-based retransmission, dedicated indication information is included in the DRX configuration parameters. If the DRX configuration parameters implicitly indicate whether the N sets of DRX patterns support C-RNTI-based retransmission, values of other parameters may be used to implicitly indicate whether the N sets of DRX patterns support C-RNTI-based retransmission.

In some embodiments, the method further includes:
if C-RNTI-based retransmission is supported, after the terminal feeds back a HARQ NACK, starting a HARQ RTT timer, and after the HARQ RTT timer expires, starting a retransmission timer, where before the retransmission timer expires, the terminal monitors a PDCCH scrambled by a G-RNTI 1 and a PDCCH scrambled by a C-RNTI; or
if C-RNTI-based retransmission is not supported, after the terminal feeds back a HARQ NACK, starting a HARQ RTT timer, and after the HARQ RTT timer expires, starting a retransmission timer, where before the retransmission timer expires, the terminal monitors a PDCCH scrambled by a G-RNTI 1.

In some embodiments, the method further includes:
if a point-to-multipoint PTM path corresponding to a G-RNTI is activated for the terminal, monitoring, by the terminal within an active time of a DRX pattern corresponding to the G-RNTI, a PDCCH scrambled by the G-RNTI, and no longer monitoring the G-RNTI if the PTM path is deactivated, which can simplify the operation of the terminal and achieve power saving; or
if a point-to-point PTP path corresponding to a G-RNTI is activated for the terminal, monitoring, by the terminal within an active time of a DRX pattern corresponding to the G-RNTI, a PDCCH scrambled by a C-RNTI.

In some embodiments, the method further includes:
if both a PTM path and a PTP path are activated for the terminal,
monitoring, by the terminal within an active time of a unicast DRX pattern, a PDCCH scrambled by a C-RNTI, and monitoring, within an active time of a DRX pattern corresponding to a G-RNTI, a PDCCH scrambled by the G-RNTI; or
monitoring, by the terminal within an active time of a unicast DRX pattern, a PDCCH scrambled by a C-RNTI, and simultaneously monitoring, within an active time of a DRX pattern corresponding to a G-RNTI, a PDCCH scrambled by the G-RNTI and the PDCCH scrambled by the C-RNTI.

In some embodiments, the method further includes:
if both a PTM path and a PTP path are deactivated for the terminal, monitoring, by the terminal within an active time of a unicast DRX pattern, a PDCCH scrambled by a C-RNTI, and no longer monitoring a PDCCH scrambled by a G-RNTI, which can simplify the operation of the terminal and achieve power saving.

In some embodiments, the DRX configuration parameters include parameters of two sets of unicast DRX patterns, where when a PTP path is activated, parameters of one set of unicast DRX patterns are used, and when the PTP path is deactivated, parameters of the other set of unicast DRX patterns are used. In this way, in a case that the PTP path is activated and deactivated, different unicast DRX patterns can be used, so that power saving can be achieved as much as possible without reducing experience in reception.

In some embodiments, the DRX configuration parameters include parameters of at least two sets of DRX patterns, and usage rules corresponding to parameters of each set of DRX patterns. In this way, after receiving the parameters of the at least two sets of DRX patterns, the terminal can use the corresponding DRX patterns according to different usage rules. This can meet requirements of the terminal in different scenarios.

In some embodiments, the terminal is a terminal in a connected state, the DRX configuration parameters include parameters of one set of DRX patterns, and the terminal monitors, within an active time of the set of DRX patterns, PDCCHs scrambled by C-RNTIs, and PDCCHs scrambled by G-RNTIs corresponding to all TMGI services of interest; or
the DRX configuration parameters include parameters of at least two sets of DRX patterns, and the terminal monitors, within an active time of any one of the at least two sets of DRX patterns, PDCCHs scrambled by C-RNTIs and PDCCHs scrambled by G-RNTIs corresponding to all TMGI services of interest.

In a specific embodiment, in a DRX (unicast DRX) configuration of an NR Uu interface, the entire DRX configuration is optional, and DRX parameters may not be configured for UE that does not require power saving or in a case of high service QoS (quality of service); otherwise, DRX parameters may be configured for LTE for power saving. In the configuration of the NR Uu interface, because HARQ feedback (feedback) of Uu transmission is a mandatory feature, the HARQ RTT timer and retransmission timer (Retransmission timer) are mandatory parameters, and parameters related to the short DRX cycle (short DRX cycle) are optional parameters.

For a DRX configuration of an NR multicast broadcast service (Multicast Broadcast Service, MBS), for power saving of LTE, the LTE is prevented from always monitoring multicast scheduling. Depending on different NR MBS transmission modes and service QoS, the following DRX configuration modes may be considered:
1. For broadcast (broadcast) services, because the broadcast services generally have relatively low QoS requirements, UE may be allowed to perform reception in an idle (idle)/inactive (inactive)/connected (Connected) state. In this case, configurations of DRX related parameters may be sent to the LTE by using common signaling, such as a SIB (system information block) or an MCCH (multicast control channel). Configuration content:
   First, parameters of a DRX pattern are configured separately for one TMGI service, because one TMGI corresponds to one G-RNTI, and the parameters of the DRX pattern only affect monitoring of the corresponding G-RNTI. If there are a plurality of services, there are parameters of a plurality of DRX patterns, and the parameters of the DRX patterns are in a one-to-one relationship with G-RNTIs.

DRX parameters are an optional configuration as a whole, that is, it is allowed not to configure the DRX parameters.

In a DRX parameter set, parameters such as a length and an offset of a long cycle (long cycle), and duration of an onDuration timer need to be configured.

Parameters related to a short cycle are optional configurations.

The HARQ RTT timer and retransmission timer are optional configurations. When the TMGI service does not support HARQ feedback and retransmission, behaviors of related timers may not be required. When the TMGI service supports HARQ feedback and retransmission or an MRB in the TMGI service supports HARQ feedback and retransmission, HARQ-related timers need to be configured, and the timers are started and maintained based on a HARQ process.

2. Some multicast (multicast) services also have relatively low QoS requirements. Therefore, the UE can also be allowed to perform reception in the idle/inactive/connected state, and the configuration mode is the same as 1.

3. In the foregoing two cases, because the connected UE is also supported in receiving an MBS service, unicast DRX parameters may be optionally configured for the connected UE. Because the connected UE reports information about a multicast service that the connected UE is interested in, the network side can consider a pattern of the multicast service when configuring unicast DRX parameters, and the two patterns overlap as much as possible, so that the UE can receive both unicast and MBS services once the UE wakes up. This is equivalent to increasing duration of real sleep.

4. Other multicast services have relatively high QoS requirements, requiring the UE to enter the connected state to receive MBS services. Both a PTP leg and a PTM leg may be configured for a TMGI service. Optionally, it is allowed to use a C-RNTI to schedule retransmission of the PTM leg of the TMGI and the like. The configuration mode is as follows:

Optionally, one set of DRX parameters is configured for the UE, and is applied to both C-RNTI monitoring and G-RNTI monitoring.

Optionally, one set of unicast DRX parameters and N sets of DRX parameters corresponding to TMGIs of interest are configured for the UE, and are respectively applied to C-RNTI monitoring and monitoring of each G-RNTI, and DRX parameters of the G-RNTI also optionally include the HARQ RTT timer and the retransmission timer depending on whether HARQ feedback and retransmission are supported. In particular, due to downlink scheduling of the multicast service, length values of the HARQ RTT timer and the retransmission timer corresponding to the TMGI may not be configured, but related DL (downlink transmission) timer values are directly used.

In another specific embodiment, DRX parameters may be configured for the terminal by using common signaling.

In a case that idle/inactive UE is supported in receiving broadcast or low-QoS multicast, the network side does not know how many UEs are interested in receiving multicast services. Therefore, during configuration, parameters of the DRX pattern can only be determined based on arrival of services and QoS requirements, and are sent to all LTEs by using common signaling.

For idle/inactive UEs, DRX-related behaviors of the LTEs are as follows:
1. One UE can receive one or more services simultaneously, that is, at a per TMGI/G-RNTI granularity, one set of DRX patterns is maintained for each service, a corresponding G-RNTI is monitored within an active time of the pattern, and DRX patterns of the services are independent of each other.
2. Related operations of the onDurationTimer and Inactivity Timer are the same as those of an existing NR DRX mechanism. For example, for the drx-onDurationTimer, the terminal needs to continuously monitor the PDCCH of the network during running of the timer. For the drx-InactivityTimer, the timer is started at a first symbol after the terminal receives PDCCH signaling for uplink/downlink new data scheduling. During running of the timer, the terminal needs to continuously monitor the control channel.
3. HARQ process related timer operations, such as usage of the HARQ RTT timer and retransmission timer, are slightly different from those of the NR DRX mechanism:

Firstly, not all TMGIs require HARQ-related timers. If the TMGI does not support HARQ feedback, HARQ-related timer configurations and operations are not required. If the TMGI supports HARQ feedback, possibly some MRBs support HARQ feedback, and other MRBs do not require HARQ feedback. Therefore, each HARQ process can dynamically determine whether HARQ feedback is required. In this case, a subsequent related timer is started if HARQ feedback is required; or a related timer does not need to be started if HARQ feedback is not required.

Secondly, each UE needs to start a retransmission timer only in a case that the UE feeds back a negative acknowledgement (NACK). UE that feeds back an acknowledgement (Acknowledgement, ACK) may consider that the HARQ process ends and does not require a HARQ timer.

Finally, from a perspective of the network side, because a small quantity of UEs have fed back HARQ NACKs, the UEs are in an active time period due to the start of the retransmission timer. However, because most UEs have fed back ACKs, the UEs may not have any active timer to support them staying in the active time period. In this case, the network side should not send any new data, to prevent most LTEs from missing data reception.

4. In particular, due to particularity of the multicast service, a plurality of UEs have HARQ feedback behaviors, and this is different from a case in which one UE can keep an active time fully aligned with that of the network on a one-to-one basis. Therefore, it can be considered that, even in a case of HARQ feedback enable (HARQ feedback enable), the RTT timer and the retransmission timer are not required, and the active time delayed by an inactivity timer is used to complete a data retransmission operation.

For connected UEs, DRX-related behaviors of the LTEs are as follows:
1. For a DRX behavior related to a TMGI, the connected UE should be completely the same as the foregoing idle/inactive UE, that is, all common receiving LTEs maintain a same synchronous DRX pattern operation, and only active times of different LTEs are slightly different due to different feedback of HARQ NACKs and ACKs of a small quantity of UEs, but the differences do not vary with different UE states.
2. For the LTE in the connected state, a unicast DRX configuration enhancement may be considered. Because the UE in the connected state reports, to the network, a latest list of MBS services of interest, the network side can know, based on a union set of services of interest to the UE, specific times at which the UE needs to wake up. In this case, the unicast DRX pattern can be configured to overlap the wake-up times as much as possible to further save power.
3. If the UE receives a unicast DRX configuration, a PDCCH scrambled by a C-RNTI is monitored within an active time of unicast DRX according to the configuration, and all behaviors are consistent with those of NR DRX.
4. The unicast DRX and TMGI DRX patterns of the UE, and different TMGI DRX patterns are used independently, without affecting each other.
5. In addition, because the LTE in the connected state reports, to the network side, a list of TMGIs of interest to the UE, the network side can configure a unicast DRX pattern for the LTE based on a comprehensive consideration of the TMGIs of interest to the terminal and possible unicast service requirements, where the pattern includes all TMGI services to be received and unicast services. Therefore, the LTE only needs to maintain the unicast DRX pattern, and monitor all C-RNTIs and interested G-RNTIs within an active time of the pattern.

In another specific embodiment, DRX parameters may be configured for the terminal by using dedicated signaling.

The technical solution of this embodiment is mainly intended for a multicast service with a high QoS requirement, and requires all UEs to receive the service in the connected state. Because all the UEs are in the connected state and the UEs in the connected state are required to report the latest list of services of interest in real time, the network side well knows the multicast services and unicast services of all the UEs. Therefore, the network side can perform the DRX configuration for each LTE based on a status of each UE. The configuration includes the following cases:
In the first case, the network side needs to configure only one DRX pattern for the UE. Within an active time of the DRX pattern, the LTE needs to monitor not only a PDCCH scrambled by a C-RNTI, but also PDCCHs scrambled by all G-RNTIs of interest.

In this case, a behavior of the LTE is relatively simple. Only one set of DRX patterns needs to be maintained. For any new data scheduling from the C-RNTI or any G-RNTI, an inactivity timer is started. For each unicast HARQ process (unicast HARQ process) or a multicast HARQ process that supports HARQ feedback (multicast HARQ process with HARQ feedback enabling), HARQ-related timers need to be maintained, for example, a HARQ RTT timer and a retransmission timer. For unicast and multicast, length values of the timers may be set to be the same, or values may be configured separately.

A unified behavior may be taken for the short cycle, without distinguishing between unicast and multicast, or only operations such as starting the short cycle for unicast are performed, and multicast scheduling does not affect the short cycle operation.

In this case, that the LTE receives various data scheduled through a multicast PTP leg, or a unicast PTP leg, or a multicast PTM leg, or a PTM leg scheduled by a C-RNTI is an equivalent HARQ operation, which has completely consistent impact on DRX. The UE operation is relatively simple.

In a first case, because there is only one set of DRX patterns for controlling monitoring of all C-RNTIs and G-RNTIs, all service features need to be considered in the setting of DRX parameters, and QoS requirements of all UEs need to be ensured as far as possible. In some special cases, there may be some enhancement considerations:
If temporary suspension or deactivation of a G-RNTI service, or deactivation of both a PTM leg and a PTP leg corresponding to a G-RNTI is taken into account, two sets of DRX parameter values or a plurality of sets of DRX parameter values may be configured for the LTE, and usage rules corresponding to the plurality of sets of parameters are used by default or configured. For example, usage of the two sets of DRX parameters is: if the G-RNTI service of the UE is in an activated sate, a DRX parameter set 1 is used; or if the G-RNTI service of the UE is in a deactivated state, a DRX parameter set 2 is used. In the plurality of sets of DRX parameters, a consistent offset (offset) and an integer multiple of a cycle (cycle) need to be ensured, and duration of an onDuration timer and an inactivity timer can be adjusted. In addition, at a point for triggering a DRX parameter change, if the foregoing timers still run, new parameter values are directly used, or if the timers have expired, new parameter values are used in a next cycle.

If a change of a service of interest to the UE such as addition of a new service of interest, or removal of a service of interest is considered, a DRX pattern may be reconfigured, to better comply with an arrival feature of a latest service combination.

In a second case, the network side needs to configure one unicast DRX pattern and N G-RNTI DRX patterns for the UE, where 1 ≤ N ≤ m, and m is the number of multicast services of interest to the UE, and within an active time of the unicast DRX pattern, the LTE monitors a PDCCH scrambled by a C-RNTI, including scheduling of a PTP leg corresponding to a multicast service, and monitors corresponding PDCCHs scrambled by G-RNTIs within active times of the N G-RNTI DRX patterns separately.

In an extreme case, N = 1, which means that the LTE monitors, within an active time independent of a unicast DRX pattern, PDCCHs scrambled by all G-RNTIs of interest.

In another extreme case, N = m, where m is the number of multicast services of interest to the UE, that is, a DRX pattern is configured for monitoring each of the m G-RNTIs.

In an intermediate case, if 1 < N < m, m TMGIs/G-RNTIs may be divided into N groups, and N DRX patterns may be configured. Each group corresponds to one DRX pattern. How to group the TMGIs/G-RNTIs depends on a specific implementation of a base station.

Which configuration is specifically used may depend on a specific implementation of the network side.

In the second case, because at least the DRX patterns of the C-RNTI and G-RNTIs are maintained independently, there is an additional problem, that is, with respect to initial transmission scheduled by a G-RNTI, retransmission may be scheduled by the C-RNTI.

In other words, for each G-RNTI, whether C-RNTI-based retransmission is supported needs to be configured explicitly or configured by default:
If C-RNTI-based retransmission is supported, a HARQ process related timer corresponding to a G-RNTI also needs to affect monitoring of the C-RNTI. For example, a G-RNTI 1 schedules initial transmission of a HARQ process 1, and the UE feeds back a HARQ NACK, starts a HARQ RTT timer, and after the timer expires, starts a retransmission timer. Within a period of the timer, the LTE not only needs to monitor a PDCCH scrambled by the G-RNTI 1, but also needs to monitor a PDCCH scrambled by the C-RNTI to copy with possible retransmission scheduling.

If C-RNTI-based retransmission is not supported, the HARQ process related timer corresponding to the G-RNTI only affects monitoring of the G-RNTI and does not affect the C-RNTI. For example, the G-RNTI 1 schedules initial transmission of the HARQ process 1, and the UE feeds back a HARQ NACK, starts the HARQ RTT timer, and after the HARQ RTT timer expires, starts the retransmission timer. Within the period of the timer, the UE needs to monitor only the PDCCH scrambled by the G-RNTI 1, and does not need to monitor the PDCCH scrambled by the C-RNTI (because the G-RNTI 1 is configured not to support cross-RNTI HARQ retransmission scheduling, that is, the C-RNTI is not used to schedule retransmission), to copy with possible retransmission scheduling.

In the second mode, there is also a case in which both a PTM leg and a PTP leg of an MRB of a G-RNTI are configured. However, the PTM leg is generally scheduled by using the G-RNTI (a possibility of using the C-RNTI to schedule retransmission is not excluded), and the PTP leg is definitely scheduled by using the C-RNTI. Therefore, activated and deactivated states of the PTM leg and the PTP leg affect monitoring of the PDCCHs scrambled by different RNTIs. Details are as follows:

If only the PTM leg is activated, it means that the PDCCH scrambled by the G-RNTI needs to be monitored within the active time of the DRX pattern of the G-RNTI, and monitoring of the PDCCH scrambled by the C-RNTI complies with the unicast DRX pattern.

If only the PTP leg is activated, there are two processing manners:
In one processing manner, the LTE still monitors, only within an interval of the active time of the unicast DRX pattern, the PDCCH scrambled by the C-RNTI. This means that scheduling of the PTP leg of the multicast service also needs to comply with the unicast DRX configuration. This is relatively simple for implementation of the UE, but may increase waiting duration for the multicast service.

In the other processing manner, the UE monitors, not only within an interval of the active time of the unicast DRX pattern but also within an interval of the active time of the DRX pattern corresponding to the G-RNTI, the PDCCH scrambled by the C-RNTI. This means that scheduling of the PTP leg of the multicast service on the network side may comply with the arrival feature and DRX configuration of the G-RNTI service. In this manner, better service experience is provided, but LTE operations are relatively complex because it is necessary to maintain two sets of independent DRX patterns.

If both the PTP leg and the PTM leg are activated, because PTP options are different, there are also two processing manners:
In one processing manner, the LTE still monitors, only within the interval of the active time of the unicast DRX pattern, the PDCCH scrambled by the C-RNTI. This means that scheduling of the PTP leg of the multicast service also needs to comply with the unicast DRX configuration. However, the UE monitors, within the interval of the active time of the DRX pattern corresponding to the G-RNTI, the PDCCH scrambled by the G-RNTI, and waits for PTM scheduling. This means that the C-RNTI and the G-RNTI respectively comply with their DRX patterns.

In the other processing manner, the UE monitors, within the interval of the active time of the unicast DRX pattern, the PDCCH scrambled by the C-RNTI, and simultaneously monitors, within the active time of the DRX pattern corresponding to the G-RNTI, the PDCCHs scrambled by the C-RNTI and the G-RNTI. This means that scheduling of the PTP leg of the multicast service on the network side may comply with the arrival feature and DRX configuration of the G-RNTI service. In this manner, better service experience is provided, but UE operations are relatively complex because it is necessary to maintain two sets of independent DRX patterns.

If both the PTP leg and the PTM leg are deactivated, because PTP options are different, there are also two processing manners:
In one processing manner, the UE still monitors, within the interval of the active time of the unicast DRX pattern, the PDCCH scrambled by the C-RNTI, but does not monitor the G-RNTI any longer.

In the other processing manner, the UE monitors, within the interval of the active time of the unicast DRX pattern, the PDCCH scrambled by the C-RNTI, but does not monitor the G-RNTI any longer.

In the foregoing two processing manners, the behavior of the LTE seems to be consistent, but in fact there is a difference in the configuration of the unicast DRX pattern. The first manner takes into account the arrival feature of the G-RNTI service during the configuration, but the second manner takes only the arrival feature of the unicast service into account. Therefore, duration of the active time in the first manner is longer than that in the second manner, or power saving performance is weaker than that in the second manner.

Another possible optimization is that in the first case, two sets of parameters are configured for the unicast DRX pattern. One set of parameters takes into account the arrival features of both the unicast and G-RNTI services, and the configured active time is longer. The other set of parameters removes impact of the G-RNTI service and takes only features of the unicast service into account. When the PTP leg is activated, the UE uses the first set of unicast DRX parameters. When the PTP leg is deactivated, the UE uses the second set of unicast DRX parameters.

The technical solutions of the embodiments of this application may be applied in a 5G system, and may also be extended to other communications systems.

It should be noted that the multicast service receiving method provided in this embodiment of this application may be performed by a multicast service receiving apparatus, or a module configured to perform the multicast service receiving method in the multicast service receiving apparatus. The multicast service receiving method provided in this embodiment of this application is described by using an example in which the multicast service receiving apparatus performs the multicast service receiving method in this embodiment of this application.

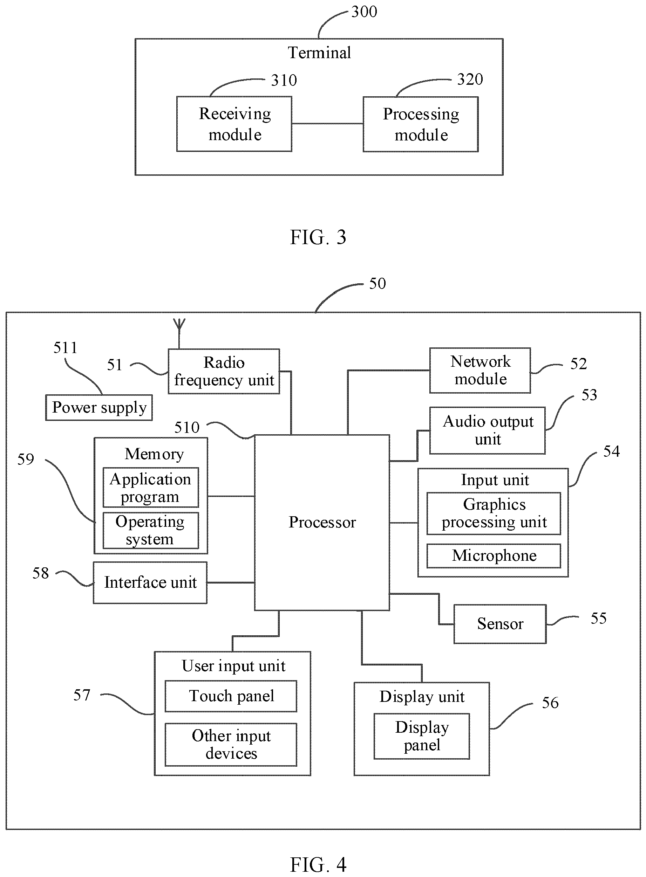

An embodiment of this application provides a multicast service receiving apparatus. The apparatus is applied to a terminal 300. The terminal receives at least one target multicast service or is interested in at least one target multicast service. As shown in FIG. 3, the apparatus includes:
a receiving module 310, configured to receive discontinuous reception DRX configuration parameters, where the DRX configuration parameters include parameters of a unicast unicast DRX pattern and/or parameters of a DRX pattern corresponding to a temporary mobile group identity TMGI service; and
a processing module 320, configured to perform discontinuous reception of the target multicast service according to the DRX configuration parameters, where the discontinuous reception includes at least one of the following:
   monitoring, within an active time of the unicast DRX pattern, a physical downlink control channel PDCCH scrambled by a cell radio network temporary identifier C-RNTI; and
   monitoring, within an active time of the DRX pattern corresponding to the TMGI service, a PDCCH scrambled by a group radio network temporary identifier G-RNTI corresponding to the TMGI service.

In this embodiment of this application, in a multicast service operation, a network side configures different DRX parameters to instruct a terminal to monitor different PDCCHs and save power while receiving multicast and unicast services, so as to ensure that power saving can be achieved as much as possible without reducing user experience in reception and that experience of the terminal in receiving the multicast service and a power saving effect of the terminal are improved on a basis of ensuring efficiency of a communications system.

In some embodiments, if the terminal is interested in at least one TMGI service, the DRX configuration parameters include parameters of at least one set of DRX patterns, and each set of DRX patterns corresponds to one TMGI service or G-RNTI.

In some embodiments,
the processing module is specifically configured to monitor, within an active time of each set of DRX patterns, a PDCCH scrambled by the corresponding G-RNTI.

In some embodiments, the DRX configuration parameters include at least a period and an offset of a long DRX cycle, and duration of a DRX onDuration timer.

In some embodiments, if the TMGI service supports HARQ feedback and retransmission or a multicast radio bearer MRB in the TMGI service supports HARQ feedback and retransmission, the DRX configuration parameters include at least one of the following:
a hybrid automatic repeat request HARQ round-trip RTT timer; and
a retransmission timer.

In some embodiments, the apparatus further includes:
a starting module, configured to start the HARQ RTT timer after a negative acknowledgement NACK is fed back to a network side, and start the retransmission timer after the HARQ RTT timer expires.

In some embodiments, the apparatus further includes:
a starting and maintenance module, configured to start and maintain the HARQ RTT timer and the retransmission timer when a HARQ feedback function is enabled, or not to start or maintain the HARQ RTT timer and the retransmission timer when a HARQ feedback function is disabled.

In some embodiments, the terminal is a terminal in a connected state, and the DRX configuration parameters include the parameters of the unicast DRX pattern and the parameters of the DRX pattern corresponding to the TMGI service.

In some embodiments, the terminal is a terminal in a connected state, the DRX configuration parameters include the parameters of the unicast DRX pattern, and the processing module is specifically configured to monitor, within the active time of the unicast DRX pattern, the PDCCH scrambled by the C-RNTI, and a PDCCH scrambled by a G-RNTI corresponding to a TMGI service of interest.

In some embodiments, the DRX configuration parameters include parameters of one set of unicast DRX patterns, and the processing module is specifically configured to monitor, within an active time of the set of unicast DRX patterns, PDCCHs scrambled by all C-RNTIs and PDCCHs scrambled by G-RNTIs corresponding to TMGI services of interest; or
the DRX configuration parameters include parameters of one set of DRX patterns, and the processing module is specifically configured to monitor, within an active time of the set of DRX patterns, PDCCHs scrambled by all C-RNTIs and PDCCHs scrambled by G-RNTIs corresponding to TMGI services of interest.

In some embodiments, the DRX configuration parameters include parameters of one set of unicast DRX patterns and parameters of N sets of DRX patterns corresponding to TMGI services or G-RNTIs, where N is greater than or equal to 1 and less than or equal to m, and m is the number of TMGI services of interest to the terminal.

In some embodiments, the DRX configuration parameters include any one of the following:
configuration information about whether a short DRX cycle is started for each of the N+1 sets of DRX patterns;
configuration information about whether a short DRX cycle is started for the unicast DRX pattern and configuration information about whether a short DRX cycle is started for the N sets of DRX patterns;
configuration information about whether a short DRX cycle is started for the N+1 sets of DRX patterns; and
configuration information about whether a short DRX cycle is started for each group of DRX patterns in the N+1 sets of DRX patterns, where the N+1 sets of DRX patterns are divided into at least two groups of DRX patterns.

In some embodiments, the processing module is specifically configured to monitor, within an active time of a unicast DRX pattern, a PDCCH scrambled by a C-RNTI; and
the processing module is specifically configured to separately monitor, within active times of N DRX patterns corresponding to TMGI services, PDCCHs scrambled by corresponding G-RNTIs.

In some embodiments, N is less than m and greater than 1, the m TMGI services of interest to the terminal are divided into N groups, and each group corresponds to one DRX pattern.

In some embodiments, the DRX configuration parameters explicitly indicate or implicitly indicate whether the N sets of DRX patterns support C-RNTI-based retransmission.

In some embodiments, the apparatus further includes:
a timer starting module, configured to: if C-RNTI-based retransmission is supported, after the terminal feeds back a HARQ NACK, start a HARQ RTT timer, and after the HARQ RTT timer expires, start a retransmission timer, where before the retransmission timer expires, a PDCCH scrambled by a G-RNTI 1 and a PDCCH scrambled by a C-RNTI are monitored; or
if C-RNTI-based retransmission is not supported, after the terminal feeds back a HARQ NACK, start a HARQ RTT timer, and after the HARQ RTT timer expires, start a retransmission timer, where before the retransmission timer expires, a PDCCH scrambled by a G-RNTI 1 is monitored.

In some embodiments, the processing module is specifically configured to: if a point-to-multipoint PTM path corresponding to a G-RNTI is activated for the terminal, monitor, within an active time of a DRX pattern corresponding to the G-RNTI, a PDCCH scrambled by the G-RNTI, and no longer monitor the G-RNTI if the PTM path is deactivated; or
if a point-to-point PTP path corresponding to a G-RNTI is activated for the terminal, monitor, within an active time of a DRX pattern corresponding to the G-RNTI, a PDCCH scrambled by a C-RNTI.

In some embodiments, the processing module is specifically configured to: if both a PTM path and a PTP path are activated for the terminal, monitor, within an active time of a unicast DRX pattern, a PDCCH scrambled by a C-RNTI, and monitor, within an active time of a DRX pattern corresponding to a G-RNTI, a PDCCH scrambled by the G-RNTI; or
monitor, within an active time of a unicast DRX pattern, a PDCCH scrambled by a C-RNTI, and simultaneously monitor, within an active time of a DRX pattern corresponding to a G-RNTI, a PDCCH scrambled by the G-RNTI and the PDCCH scrambled by the C-RNTI.

In some embodiments, the processing module is specifically configured to: if both a PTM path and a PTP path are deactivated for the terminal, monitor, within an active time of a unicast DRX pattern, a PDCCH scrambled by a C-RNTI, and no longer monitor a PDCCH scrambled by a G-RNTI.

In some embodiments, the DRX configuration parameters include parameters of two sets of unicast DRX patterns, where when a PTP path is activated, parameters of one set of unicast DRX patterns are used, and when the PTP path is deactivated, parameters of the other set of unicast DRX patterns are used.

In some embodiments, the DRX configuration parameters include parameters of at least two sets of DRX patterns, and usage rules corresponding to parameters of each set of DRX patterns.

In some embodiments, the terminal is a terminal in a connected state, the DRX configuration parameters include parameters of one set of DRX patterns, and the processing module is specifically configured to monitor, within an active time of the set of DRX patterns, PDCCHs scrambled by C-RNTIs, and PDCCHs scrambled by G-RNTIs corresponding to all TMGI services of interest; or
the DRX configuration parameters include parameters of at least two sets of DRX patterns, and the processing module is specifically configured to monitor, within an active time of any one of the at least two sets of DRX patterns, PDCCHs scrambled by C-RNTIs and PDCCHs scrambled by G-RNTIs corresponding to all TMGI services of interest.

The apparatus for receiving a multicast service in this embodiment of this application may be a terminal, or may be a component, an integrated circuit, or a chip in a terminal. The apparatus may be a mobile electronic device, or may be a nonmobile electronic device. For example, the mobile electronic device may be a mobile phone, a tablet computer, a notebook computer, a palmtop computer, an in-vehicle electronic device, a wearable device, an ultra-mobile personal computer (Ultra-Mobile Personal Computer, UMPC), a netbook, a personal digital assistant (Personal Digital Assistant, PDA), or the like. The nonmobile electronic device may be a network attached storage (Network Attached Storage, NAS), a personal computer (personal computer, PC), a television (Television, TV), a teller machine, a self-service machine, or the like. This is not specifically limited in this embodiment of this application.

The apparatus for receiving a multicast service in this embodiment of this application may be an apparatus having an operating system. The operating system may be an Android (Android) operating system, an iOS operating system, or other possible operating systems, and is not specifically limited in this embodiment of this application.

Optionally, an embodiment of this application further provides an electronic device, including a processor, a memory, and a program or instructions stored in the memory and capable of running on the processor. When the program or instructions are executed by the processor, each process of the foregoing embodiment of the multicast service receiving method is implemented, with the same technical effect achieved. To avoid repetition, details are not described herein again.

It should be noted that electronic devices in this embodiment of this application include the foregoing mobile electronic device and a nonmobile electronic device.

The electronic device in this embodiment may be a terminal. FIG. 4 is a schematic diagram of a hardware structure of a terminal for implementing each embodiment of this application. The terminal 50 includes but is not limited to components such as a radio frequency unit 51, a network module 52, an audio output unit 53, an input unit 54, a sensor 55, a display unit 56, a user input unit 57, an interface unit 58, a memory 59, a processor 510, and a power supply 511. Persons skilled in the art may understand that the structure of the terminal shown in FIG. 4 does not constitute any limitation on the terminal. The terminal may include more or fewer components than those shown in the figure, or some components are combined, or component arrangements are different. In this embodiment of this application, the terminal includes but is not limited to a mobile phone, a tablet computer, a notebook computer, a palmtop computer, a vehicle-mounted terminal, a wearable device, a pedometer, or the like.

It should be understood that in this embodiment of this application, the radio frequency unit 51 may be configured to receive and send information, or to receive and send a signal in a call process, and specifically, after receiving downlink data from a base station, send the downlink data to the processor 510 for processing; and also send uplink data to the base station. Generally, the radio frequency unit 51 includes but is not limited to an antenna, at least one amplifier, a transceiver, a coupler, a low noise amplifier, a duplexer, and the like. In addition, the radio frequency unit 51 may also communicate with a network and other devices via a wireless communications system.

The memory 59 may be configured to store software programs and various data. The memory 59 may primarily include a program storage area and a data storage area. The program storage area may store an operating system, an application program (such as an audio play function and an image play function) required by at least one function, and the like. The data storage area may store data (such as audio data and a phone book) created based on use of the mobile phone. In addition, the memory 59 may include a high-speed random access memory, and may further include a non-volatile memory such as at least one disk storage device, a flash memory device, or another volatile solid-state storage device.

The processor 510 is a control center of the terminal, and is connected to all components of the terminal by using various interfaces and lines. By running or executing a software program and/or module that is stored in the memory 59 and calling data stored in the memory 59, the processor 510 executes various functions of the terminal and processes data, so as to perform overall monitoring on the terminal. The processor 510 may include one or at least two processing units. Preferably, the processor 510 may integrate an application processor and a modem processor. The application processor mainly processes the operating system, a user interface, an application program, and the like. The modem processor mainly processes wireless communication. It may be understood that the modem processor may alternatively be not integrated in the processor 510.

The terminal 50 may further include the power supply 511 (such as a battery) supplying power to each component. Preferably, the power supply 511 may be logically connected to the processor 510 by using a power management system, so that functions such as charge and discharge management and power consumption management are implemented by using the power management system.

In addition, the terminal 50 includes some functional modules that are not shown. Details are not described herein.

In some embodiments, the processor 510 is configured to receive discontinuous reception DRX configuration parameters, where the DRX configuration parameters include parameters of a unicast unicast DRX pattern and/or parameters of a DRX pattern corresponding to a temporary mobile group identity TMGI service; and perform discontinuous reception of the target multicast service according to the DRX configuration parameters, where the discontinuous reception includes at least one of the following:
monitoring, within an active time of the unicast DRX pattern, a physical downlink control channel PDCCH scrambled by a cell radio network temporary identifier C-RNTI; and
monitoring, within an active time of the DRX pattern corresponding to the TMGI service, a PDCCH scrambled by a group radio network temporary identifier G-RNTI corresponding to the TMGI service.

In some embodiments, if the terminal is interested in at least one TMGI service, the DRX configuration parameters include parameters of at least one set of DRX patterns, and each set of DRX patterns corresponds to one TMGI service or G-RNTI.

In some embodiments,
the processor 510 is specifically configured to monitor, within an active time of each set of DRX patterns, a PDCCH scrambled by the corresponding G-RNTI.

In some embodiments, the DRX configuration parameters include at least a period and an offset of a long DRX cycle, and duration of a DRX onDuration timer.

In some embodiments, if the TMGI service supports HARQ feedback and retransmission or a multicast radio bearer MRB in the TMGI service supports HARQ feedback and retransmission, the DRX configuration parameters include at least one of the following:
a hybrid automatic repeat request HARQ round-trip RTT timer; and
a retransmission timer.

In some embodiments, the apparatus further includes:
a starting module, configured to start the HARQ RTT timer after a negative acknowledgement NACK is fed back to a network side, and start the retransmission timer after the HARQ RTT timer expires.

In some embodiments, the apparatus further includes:
a starting and maintenance module, configured to start and maintain the HARQ RTT timer and the retransmission timer when a HARQ feedback function is enabled, or not to start or maintain the HARQ RTT timer and the retransmission timer when a HARQ feedback function is disabled.

In some embodiments, the terminal is a terminal in a connected state, and the DRX configuration parameters include the parameters of the unicast DRX pattern and the parameters of the DRX pattern corresponding to the TMGI service.

In some embodiments, the terminal is a terminal in a connected state, the DRX configuration parameters include the parameters of the unicast DRX pattern, and the processor 510 is specifically configured to monitor, within the active time of the unicast DRX pattern, the PDCCH scrambled by the C-RNTI, and a PDCCH scrambled by a G-RNTI corresponding to a TMGI service of interest.

In some embodiments, the DRX configuration parameters include parameters of one set of unicast DRX patterns, and the processor 510 is specifically configured to monitor, within an active time of the set of unicast DRX patterns, PDCCHs scrambled by all C-RNTIs and PDCCHs scrambled by G-RNTIs corresponding to TMGI services of interest; or
the DRX configuration parameters include parameters of one set of DRX patterns, and the processor 510 is specifically configured to monitor, within an active time of the set of DRX patterns, PDCCHs scrambled by all C-RNTIs and PDCCHs scrambled by G-RNTIs corresponding to TMGI services of interest.

In some embodiments, the DRX configuration parameters include parameters of one set of unicast DRX patterns and parameters of N sets of DRX patterns corresponding to TMGI services or G-RNTIs, where N is greater than or equal to 1 and less than or equal to m, and m is the number of TMGI services of interest to the terminal.

In some embodiments, the DRX configuration parameters include any one of the following:
configuration information about whether a short DRX cycle is started for each of the N+1 sets of DRX patterns;
configuration information about whether a short DRX cycle is started for the unicast DRX pattern and configuration information about whether a short DRX cycle is started for the N sets of DRX patterns;
configuration information about whether a short DRX cycle is started for the N+1 sets of DRX patterns; and
configuration information about whether a short DRX cycle is started for each group of DRX patterns in the N+1 sets of DRX patterns, where the N+1 sets of DRX patterns are divided into at least two groups of DRX patterns.

In some embodiments, the processor 510 is specifically configured to monitor, within an active time of a unicast DRX pattern, a PDCCH scrambled by a C-RNTI; and
the processor 510 is specifically configured to separately monitor, within active times of N DRX patterns corresponding to TMGI services, PDCCHs scrambled by corresponding G-RNTIs.

In some embodiments, N is less than m and greater than 1, the m TMGI services of interest to the terminal are divided into N groups, and each group corresponds to one DRX pattern.

In some embodiments, the DRX configuration parameters explicitly indicate or implicitly indicate whether the N sets of DRX patterns support C-RNTI-based retransmission.

In some embodiments, the apparatus further includes:
a timer starting module, configured to: if C-RNTI-based retransmission is supported, after the terminal feeds back a HARQ NACK, start a HARQ RTT timer, and after the HARQ RTT timer expires, start a retransmission timer, where before the retransmission timer expires, a PDCCH scrambled by a G-RNTI 1 and a PDCCH scrambled by a C-RNTI are monitored; or
if C-RNTI-based retransmission is not supported, after the terminal feeds back a HARQ NACK, start a HARQ RTT timer, and after the HARQ RTT timer expires, start a retransmission timer, where before the retransmission timer expires, a PDCCH scrambled by a G-RNTI 1 is monitored.

In some embodiments, the processor 510 is specifically configured to: if a point-to-multipoint PTM path corresponding to a G-RNTI is activated for the terminal, monitor, within an active time of a DRX pattern corresponding to the G-RNTI, a PDCCH scrambled by the G-RNTI, and no longer monitor the G-RNTI if the PTM path is deactivated; or
if a point-to-point PTP path corresponding to a G-RNTI is activated for the terminal, monitor, within an active time of a DRX pattern corresponding to the G-RNTI, a PDCCH scrambled by a C-RNTI.

In some embodiments, the processor 510 is specifically configured to: if both a PTM path and a PTP path are activated for the terminal, monitor, within an active time of a unicast DRX pattern, a PDCCH scrambled by a C-RNTI, and monitor, within an active time of a DRX pattern corresponding to a G-RNTI, a PDCCH scrambled by the G-RNTI; or
monitor, within an active time of a unicast DRX pattern, a PDCCH scrambled by a C-RNTI, and simultaneously monitor, within an active time of a DRX pattern corresponding to a G-RNTI, a PDCCH scrambled by the G-RNTI and the PDCCH scrambled by the C-RNTI.

In some embodiments, the processor 510 is specifically configured to: if both a PTM path and a PTP path are deactivated for the terminal, monitor, within an active time of a unicast DRX pattern, a PDCCH scrambled by a C-RNTI, and no longer monitor a PDCCH scrambled by a G-RNTI.

In some embodiments, the DRX configuration parameters include parameters of two sets of unicast DRX patterns, where when a PTP path is activated, parameters of one set of unicast DRX patterns are used, and when the PTP path is deactivated, parameters of the other set of unicast DRX patterns are used.

In some embodiments, the DRX configuration parameters include parameters of at least two sets of DRX patterns, and usage rules corresponding to parameters of each set of DRX patterns.

In some embodiments, the terminal is a terminal in a connected state, the DRX configuration parameters include parameters of one set of DRX patterns, and the processor 510 is specifically configured to monitor, within an active time of the set of DRX patterns, PDCCHs scrambled by C-RNTIs, and PDCCHs scrambled by G-RNTIs corresponding to all TMGI services of interest; or
the DRX configuration parameters include parameters of at least two sets of DRX patterns, and the processor 510 is specifically configured to monitor, within an active time of any one of the at least two sets of DRX patterns, PDCCHs scrambled by C-RNTIs and PDCCHs scrambled by G-RNTIs corresponding to all TMGI services of interest.

An embodiment of this application further provides a readable storage medium. The readable storage medium stores a program or instructions. When the program or instructions are executed by a processor, each process of the foregoing embodiment of the multicast service receiving method is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communications interface. The communications interface is coupled to the processor. The processor is configured to run a program or instructions to implement each process of the foregoing embodiment of the multicast service receiving method, with the same technical effect achieved. To avoid repetition, details are not described herein again.

It should be understood that the chip provided in this embodiment of this application may also be referred to as a system-level chip, a system chip, a chip system, a system-on-chip, or the like.

An embodiment of this application further provides a computer program product. The computer program product is stored in a non-volatile storage medium. The computer program product is executed by at least one processor to implement each process of the foregoing embodiment of the multicast service receiving method, with the same technical effect achieved. To avoid repetition, details are not described herein again.

It should be noted that in this specification, the term "comprise", "include", or any variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, persons skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a software product. The computer software product is stored in a storage medium (such as a ROM/RAM, a magnetic disk, or an optical disc), and includes several instructions for enabling a terminal (which may be a mobile phone, a computer, a server, a network device, or the like) to perform the methods described in the embodiments of this application.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the embodiments provided in this application, it should be understood that the disclosed apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit.

When the functions are implemented in a form of a software functional unit and sold or used as a separate product, the functions may be stored in a computer-readable storage medium. Based on such an understanding, the technical solutions of this application essentially, or the part contributing to the related art, or part of the technical solutions may be embodied in a form of a software product, and the computer software product is stored in a storage medium, including several instructions for instructing a computer device (which may be a personal computer, a server, a network device, or the like) to execute all or some of the steps of the method in each embodiment of this application. The foregoing storage medium includes: any medium that can store program code, such as a USB flash drive, a removable hard disk, a ROM, a RAM, a magnetic disk, or an optical disc.

Persons of ordinary skill in the art may understand that all or a part of the processes of the foregoing method embodiments may be implemented by related hardware controlled by a computer program. The program may be stored in a computer-readable storage medium. When the program is executed, the processes of the foregoing method embodiments may be performed. The storage medium may be a magnetic disk, an optical disc, a ROM, a RAM, or the like.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A multicast service receiving method, performed by a terminal, wherein the terminal receives at least one target multicast service or is interested in at least one target multicast service, and the method comprises:
receiving discontinuous reception DRX configuration parameters, wherein the DRX configuration parameters comprise parameters of a unicast unicast DRX pattern and/or parameters of a DRX pattern corresponding to a temporary mobile group identity TMGI service; and
performing discontinuous reception of the target multicast service according to the DRX configuration parameters, wherein the discontinuous reception comprises at least one of the following:
monitoring, within an active time of the unicast DRX pattern, a physical downlink control channel PDCCH scrambled by a cell radio network temporary identifier C-RNTI; and
monitoring, within an active time of the DRX pattern corresponding to the TMGI service, a PDCCH scrambled by a group radio network temporary identifier G-RNTI corresponding to the TMGI service.

2. The method according to claim 1, wherein if the terminal is interested in at least one TMGI service, the DRX configuration parameters comprise parameters of at least one set of DRX patterns, and each set of DRX patterns corresponds to one TMGI service or G-RNTI.

3. The method according to claim 2, further comprising:
monitoring, within an active time of each set of DRX patterns, a PDCCH scrambled by the corresponding G-RNTI.

4. The method according to claim 1, wherein the DRX configuration parameters comprise at least a period and an offset of a long DRX cycle, and duration of a DRX onDuration timer.

5. The method according to claim 2, wherein if the TMGI service supports HARQ feedback and retransmission, or if a multicast radio bearer MRB in the TMGI service supports HARQ feedback and retransmission, the DRX configuration parameters comprise at least one of the following:
a hybrid automatic repeat request HARQ round-trip RTT timer; and
a retransmission timer.

6. The method according to claim 5, further comprising:
after a negative acknowledgement NACK is fed back to a network side, starting the HARQ RTT timer, and after the HARQ RTT timer expires, starting the retransmission timer.

7. The method according to claim 5, further comprising:
when a HARQ feedback function is enabled, starting and maintaining the HARQ RTT timer and the retransmission timer; or
when a HARQ feedback function is disabled, not starting or maintaining the HARQ RTT timer and the retransmission timer.

8. The method according to claim 1, wherein the terminal is a terminal in a connected state, and the DRX configuration parameters comprise the parameters of the unicast DRX pattern and the parameters of the DRX pattern corresponding to the TMGI service.

9. The method according to claim 1, wherein the terminal is a terminal in a connected state, the DRX configuration parameters comprise the parameters of the unicast DRX pattern, and the terminal monitors, within the active time of the unicast DRX pattern, the PDCCH scrambled by the C-RNTI, and a PDCCH scrambled by a G-RNTI corresponding to a TMGI service of interest.

10. The method according to claim 1, wherein the DRX configuration parameters comprise parameters of one set of unicast DRX patterns, and the terminal monitors, within an active time of the set of unicast DRX patterns, PDCCHs scrambled by all C-RNTIs and PDCCHs scrambled by G-RNTIs corresponding to TMGI services of interest; or
the DRX configuration parameters comprise parameters of one set of DRX patterns, and the terminal monitors, within an active time of the set of DRX patterns, PDCCHs scrambled by all C-RNTIs and PDCCHs scrambled by G-RNTIs corresponding to TMGI services of interest.

11. The method according to claim 1, wherein the DRX configuration parameters comprise parameters of one set of unicast DRX patterns and parameters of N sets of DRX patterns corresponding to TMGI services or G-RNTIs, wherein N is greater than or equal to 1 and less than or equal to m, and m is the number of TMGI services of interest to the terminal.

12. The method according to claim 11, wherein the DRX configuration parameters comprise any one of the following:
configuration information about whether a short DRX cycle is started for each of the N+1 sets of DRX patterns;
configuration information about whether a short DRX cycle is started for the unicast DRX pattern and configuration information about whether a short DRX cycle is started for the N sets of DRX patterns;
configuration information about whether a short DRX cycle is started for the N+1 sets of DRX patterns; and
configuration information about whether a short DRX cycle is started for each group of DRX patterns in the N+1 sets of DRX patterns, wherein the N+1 sets of DRX patterns are divided into at least two groups of DRX patterns.

13. The method according to claim 11, further comprising:
monitoring, within an active time of a unicast DRX pattern, a PDCCH scrambled by a C-RNTI; and
separately monitoring, within active times of N sets of DRX patterns corresponding to TMGI services, PDCCHs scrambled by corresponding G-RNTIs.

14. The method according to claim 11, wherein N is less than m and greater than 1, the m TMGI services of interest to the terminal are divided into N groups, and each group corresponds to one DRX pattern.

15. The method according to claim 11, wherein the DRX configuration parameters explicitly indicate or implicitly indicate whether the N sets of DRX patterns support C-RNTI-based retransmission.

16. The method according to claim 15, further comprising:
if C-RNTI-based retransmission is supported, after the terminal feeds back a HARQ NACK, starting a HARQ RTT timer, and after the HARQ RTT timer expires, starting a retransmission timer, wherein before the retransmission timer expires, the terminal monitors a PDCCH scrambled by a G-RNTI 1 and a PDCCH scrambled by a C-RNTI; or
if C-RNTI-based retransmission is not supported, after the terminal feeds back a HARQ NACK, starting a HARQ RTT timer, and after the HARQ RTT timer expires, starting a retransmission timer, wherein before the retransmission timer expires, the terminal monitors a PDCCH scrambled by a G-RNTI 1.

17. The method according to claim 11, further comprising:
if a point-to-multipoint PTM path corresponding to a G-RNTI is activated for the terminal, monitoring, by the terminal within an active time of a DRX pattern corresponding to the G-RNTI, a PDCCH scrambled by the G-RNTI, and no longer monitoring the G-RNTI if the PTM path is deactivated; or
if a point-to-point PTP path corresponding to a G-RNTI is activated for the terminal, monitoring, by the terminal within an active time of a DRX pattern corresponding to the G-RNTI, a PDCCH scrambled by a C-RNTI.

18. The method according to claim 11, further comprising:
if both a PTM path and a PTP path are activated for the terminal, monitoring, by the terminal within an active time of a unicast DRX pattern, a PDCCH scrambled by a C-RNTI, and monitoring, within an active time of a DRX pattern corresponding to a G-RNTI, a PDCCH scrambled by the G-RNTI; or
monitoring, by the terminal within an active time of a unicast DRX pattern, a PDCCH scrambled by a C-RNTI, and simultaneously monitoring, within an active time of a DRX pattern corresponding to a G-RNTI, a PDCCH scrambled by the G-RNTI and the PDCCH scrambled by the C-RNTI.

19. The method according to claim 11, further comprising:
if both a PTM path and a PTP path are deactivated for the terminal, monitoring, by the terminal within an active time of a unicast DRX pattern, a PDCCH scrambled by a C-RNTI, and no longer monitoring a PDCCH scrambled by a G-RNTI.

20. The method according to claim 1, wherein the DRX configuration parameters comprise parameters of two sets of unicast DRX patterns, wherein when a PTP path is activated, parameters of one set of unicast DRX patterns are used, and when the PTP path is deactivated, parameters of the other set of unicast DRX patterns are used.

21. The method according to claim 1, wherein the DRX configuration parameters comprise parameters of at least two sets of DRX patterns, and usage rules corresponding to parameters of each set of DRX patterns.

22. The method according to claim 1, wherein the terminal is a terminal in a connected state, the DRX configuration parameters comprise parameters of one set of DRX patterns, and the terminal monitors, within an active time of the set of DRX patterns, PDCCHs scrambled by C-RNTIs, and PDCCHs scrambled by G-RNTIs corresponding to all TMGI services of interest; or
the DRX configuration parameters comprise parameters of at least two sets of DRX patterns, and the terminal monitors, within an active time of any one of the at least two sets of DRX patterns, PDCCHs scrambled by C-RNTIs and PDCCHs scrambled by G-RNTIs corresponding to all TMGI services of interest.

23. An apparatus for receiving a multicast service, applied to a terminal, wherein the terminal receives at least one target multicast service or is interested in at least one target multicast service, and the apparatus comprises:
a receiving module, configured to receive discontinuous reception DRX configuration parameters, wherein the DRX configuration parameters comprise parameters of a unicast unicast DRX pattern and/or parameters of a DRX pattern corresponding to a temporary mobile group identity TMGI service; and
a processing module, configured to perform discontinuous reception of the target multicast service according to the DRX configuration parameters, wherein the discontinuous reception comprises at least one of the following:
monitoring, within an active time of the unicast DRX pattern, a physical downlink control channel PDCCH scrambled by a cell radio network temporary identifier C-RNTI; and
monitoring, within an active time of the DRX pattern corresponding to the TMGI service, a PDCCH scrambled by a group radio network temporary identifier G-RNTI corresponding to the TMGI service.

24. The apparatus according to claim 23, wherein if the terminal is interested in at least one TMGI service, the DRX configuration parameters comprise parameters of at least one set of DRX patterns, and each set of DRX patterns corresponds to one TMGI service or G-RNTI.

25. The apparatus according to claim 24, wherein the processing module is specifically configured to monitor, within an active time of each set of DRX patterns, a PDCCH scrambled by the corresponding G-RNTI.

26. The apparatus according to claim 23, wherein the DRX configuration parameters comprise at least a period and an offset of a long DRX cycle, and duration of a DRX onDuration timer.

27. The apparatus according to claim 24, wherein if the TMGI service supports HARQ feedback and retransmission or a multicast radio bearer MRB in the TMGI service supports HARQ feedback and retransmission, the DRX configuration parameters comprise at least one of the following:
a hybrid automatic repeat request HARQ round-trip RTT timer; and
a retransmission timer.

28. The apparatus according to claim 27, further comprising:
a starting module, configured to start the HARQ RTT timer after a negative acknowledgement NACK is fed back to a network side, and start the retransmission timer after the HARQ RTT timer expires.

29. The apparatus according to claim 27, further comprising:
a starting and maintenance module, configured to start and maintain the HARQ RTT timer and the retransmission timer when a HARQ feedback function is enabled, or not to start or maintain the HARQ RTT timer and the retransmission timer when a HARQ feedback function is disabled.

30. The apparatus according to claim 23, wherein the terminal is a terminal in a connected state, and the DRX configuration parameters comprise the parameters of the unicast DRX pattern and the parameters of the DRX pattern corresponding to the TMGI service.

31. The apparatus according to claim 23, wherein the terminal is a terminal in a connected state, the DRX configuration parameters comprise the parameters of the unicast DRX pattern, and the processing module is specifically configured to monitor, within the active time of the unicast DRX pattern, the PDCCH scrambled by the C-RNTI, and a PDCCH scrambled by a G-RNTI corresponding to a TMGI service of interest.

32. The apparatus according to claim 23, wherein the DRX configuration parameters comprise parameters of one set of unicast DRX patterns, and the processing module is specifically configured to monitor, within an active time of the set of unicast DRX patterns, PDCCHs scrambled by all C-RNTIs and PDCCHs scrambled by G-RNTIs corresponding to TMGI services of interest; or
the DRX configuration parameters comprise parameters of one set of DRX patterns, and the processing module is specifically configured to monitor, within an active time of the set of DRX patterns, PDCCHs scrambled by all C-RNTIs and PDCCHs scrambled by G-RNTIs corresponding to TMGI services of interest.

33. The apparatus according to claim 23, wherein the DRX configuration parameters comprise parameters of one set of unicast DRX patterns and parameters of N sets of DRX patterns corresponding to TMGI services or G-RNTIs, wherein N is greater than or equal to 1 and less than or equal to m, and m is the number of TMGI services of interest to the terminal.

34. The apparatus according to claim 33, wherein the DRX configuration parameters comprise any one of the following:
configuration information about whether a short DRX cycle is started for each of the N+1 sets of DRX patterns;
configuration information about whether a short DRX cycle is started for the unicast DRX pattern and configuration information about whether a short DRX cycle is started for the N sets of DRX patterns;
configuration information about whether a short DRX cycle is started for the N+1 sets of DRX patterns; and
configuration information about whether a short DRX cycle is started for each group of DRX patterns in the N+1 sets of DRX patterns, wherein the N+1 sets of DRX patterns are divided into at least two groups of DRX patterns.

35. The apparatus according to claim 33, wherein
the processing module is specifically configured to monitor, within an active time of a unicast DRX pattern, a PDCCH scrambled by a C-RNTI; and
the processing module is specifically configured to separately monitor, within active times of N DRX patterns corresponding to TMGI services, PDCCHs scrambled by corresponding G-RNTIs.

36. The apparatus according to claim 33, wherein N is less than m and greater than 1, the m TMGI services of interest to the terminal are divided into N groups, and each group corresponds to one DRX pattern.

37. The apparatus according to claim 33, wherein the DRX configuration parameters explicitly indicate or implicitly indicate whether the N sets of DRX patterns support C-RNTI-based retransmission.

38. The apparatus according to claim 37, wherein the apparatus further comprises:
a timer starting module, configured to: if C-RNTI-based retransmission is supported, after the terminal feeds back a HARQ NACK, start a HARQ RTT timer, and after the HARQ RTT timer expires, start a retransmission timer, wherein before the retransmission timer expires, a PDCCH scrambled by a G-RNTI 1 and a PDCCH scrambled by a C-RNTI are monitored; or
if C-RNTI-based retransmission is not supported, after the terminal feeds back a HARQ NACK, start a HARQ RTT timer, and after the HARQ RTT timer expires, start a retransmission timer, wherein before the retransmission timer expires, a PDCCH scrambled by a G-RNTI 1 is monitored.

39. The apparatus according to claim 33, wherein the processing module is specifically configured to: if a point-to-multipoint PTM path corresponding to a G-RNTI is activated for the terminal, monitor, within an active time of a DRX pattern corresponding to the G-RNTI, a PDCCH scrambled by the G-RNTI, and no longer monitor the G-RNTI if the PTM path is deactivated; or
if a point-to-point PTP path corresponding to a G-RNTI is activated for the terminal, monitor, within an active time of a DRX pattern corresponding to the G-RNTI, a PDCCH scrambled by a C-RNTI.

40. The apparatus according to claim 33, wherein the processing module is specifically configured to: if both a PTM path and a PTP path are activated for the terminal, monitor, within an active time of a unicast DRX pattern, a PDCCH scrambled by a C-RNTI, and monitor, within an active time of a DRX pattern corresponding to a G-RNTI, a PDCCH scrambled by the G-RNTI; or
monitor, within an active time of a unicast DRX pattern, a PDCCH scrambled by a C-RNTI, and simultaneously monitor, within an active time of a DRX pattern corresponding to a G-RNTI, a PDCCH scrambled by the G-RNTI and the PDCCH scrambled by the C-RNTI.

41. The apparatus according to claim 33, wherein the processing module is specifically configured to: if both a PTM path and a PTP path are deactivated for the terminal, monitor, within an active time of a unicast DRX pattern, a PDCCH scrambled by a C-RNTI, and no longer monitor a PDCCH scrambled by a G-RNTI.

42. The apparatus according to claim 23, wherein the DRX configuration parameters comprise parameters of two sets of unicast DRX patterns, wherein when a PTP path is activated, parameters of one set of unicast DRX patterns are used, and when the PTP path is deactivated, parameters of the other set of unicast DRX patterns are used.

43. The apparatus according to claim 23, wherein the DRX configuration parameters comprise parameters of at least two sets of DRX patterns, and usage rules corresponding to parameters of each set of DRX patterns.

44. The apparatus according to claim 23, wherein the terminal is a terminal in a connected state, the DRX configuration parameters comprise parameters of one set of DRX patterns, and the processing module is specifically configured to monitor, within an active time of the set of DRX patterns, PDCCHs scrambled by C-RNTIs, and PDCCHs scrambled by G-RNTIs corresponding to all TMGI services of interest; or
the DRX configuration parameters comprise parameters of at least two sets of DRX patterns, and the processing module is specifically configured to monitor, within an active time of any one of the at least two sets of DRX patterns, PDCCHs scrambled by C-RNTIs and PDCCHs scrambled by G-RNTIs corresponding to all TMGI services of interest.

45. An electronic device, comprising a processor, a memory, and a program or instructions stored in the memory and capable of running on the processor, wherein when the program or instructions are executed by the processor, the steps of the method according to any one of claims 1 to 22 are implemented.

46. A readable storage medium, wherein the readable storage medium stores a program or instructions, and when the program or instructions are executed by a processor, the steps of the method according to any one of claims 1 to 22 are implemented.

47. A chip, comprising a processor and a communications interface, wherein the communications interface is coupled to the processor, and the processor is configured to run a program or instructions to implement the steps of the method according to any one of claims 1 to 22.

48. A computer program product, wherein the computer program product is stored in a non-volatile storage medium, and the computer program product is executed by at least one processor to implement the steps of the method according to any one of claims 1 to 22.

49. A communications device, wherein the communications device is configured to perform the steps of the method according to any one of claims 1 to 22.
